Europäisches Patentamt

European Patent Office

Office européen des brevets

(19)

(11) EP 0 760 945 B1

(12) **EUROPÄISCHE PATENTSCHRIFT**

(45) Veröffentlichungstag und Bekanntmachung des Hinweises auf die Patenterteilung:
**15.12.1999 Patentblatt 1999/50**

(21) Anmeldenummer: **95921738.1**

(22) Anmeldetag: **09.05.1995**

(51) Int Cl.⁶: **G01N 27/12**

(86) Internationale Anmeldenummer:
**PCT/EP95/01755**

(87) Internationale Veröffentlichungsnummer:
**WO 95/32418 (30.11.1995 Gazette 1995/51)**

(54) **SAUERSTOFFSENSOREN AUS ERDALKALI-DOTIERTEN LANTHAN-FERRITE**

OXYGEN SENSORS MADE OF LANTHANUM FERRITE DOPED WITH EARTHY BASES

CAPTEURS D'OXYGENE EN FERRITE DE LANTHANE DOPEE AVEC DES BASES ALCALINO-TERREUSES

(84) Benannte Vertragsstaaten:
**DE FR GB IT**

(30) Priorität: **24.05.1994 DE 4418054**

(43) Veröffentlichungstag der Anmeldung:
**12.03.1997 Patentblatt 1997/11**

(73) Patentinhaber: **Heraeus Electro-Nite International N.V.**
**3530 Houthalen (BE)**

(72) Erfinder:
• **HÄRDTL, Karl-Heinz**
  **D-76767 Hagenbach (DE)**

• **SCHÖNAUER, Ulrich**
  **D-76131 Karlsruhe (DE)**
• **KRUG, Andreas**
  **D-97999 Igersheim (DE)**

(74) Vertreter: **Kühn, Hans-Christian et al**
**Heraeus Holding GmbH,**
**Stabsstelle Schutzrechte,**
**Heraeusstrasse 12-14**
**63450 Hanau (DE)**

(56) Entgegenhaltungen:
**EP-A- 0 360 159      US-A- 3 951 603**
**US-A- 4 322 968**

**Beschreibung**

Die vorliegende Erfindung betrifft Sauerstoffsensoren gemäß dem Oberbegriff des Hauptanspruches.

Sauerstoffsensoren, die Strontiumferrat, Bariumferrat oder Strontiumbariumferrat enthalten, sind bekannt (US-4 454 494). In diesen Materialien sind die Zentral-Eisenatome des Ferratgitters durch 1 bis 70 Atom-% eines Elements aus der Gruppe Titan, Cer, Tantal oder Niob ersetzt. Die chemische Stabilitätsgrenze dieser Materialien liegt bei einer Temperatur von 850°C bei einem $O_2$-Partialdruck von $pO_2 = 10^{-18}$ Bar, d.h. diese Materialien zersetzen sich bei längerem Betrieb in reduzierenden Atmosphären, wie z.B, in fettem Abgasgemisch.

Der Übergang von p- zu n-halbleitendem Sensormaterial findet bei den Materialien der US-4 454 494 schon bei relativ hohem $O_2$-Partialdruck ($> 10^{-10}$ Bar) statt. Dies führt zu Zweideutigkeit des Sensorsignals oder zu geringem Signalhub bei einem Gaswechsel zwischen fettem und magerem Abgas. Zudem weisen diese Materialien ein deutlich unterschiedliche Temperaturabhängigkeit für unterschiedliche $O_2$-Partialdruckbereiche auf.

Es ist ein Sauerstoffsensor bekannt (Chem. Abstr. 112 (1990), Ref.Nr. 126 210t), dessen Sensormaterial aus einem Erdalkali-dotierten Lanthan-ferrit besteht. Mit diesem Sensormaterial wird aber nicht die Widerstandsänderung aufgrund des erfaßten Sauerstoffpartialdrucks gemessen, sondern die thermoelektrische Kraft. Bei diesen Sensormaterialien besteht eine hochgradige Temperaturabhängigkeit. Um diese Temperaturabhängigkeit zu kompensieren, müssen zusätzliche Maßnahmen ergriffen werden, beispielsweise Temperaturregelungsmaßnahmen bzw. genaue Einstellungen der Ströme bzw. Spannungen. Diese Druckschrift enthält somit ein technisches Vorurteil gegen Sauerstoffsensoren, bei denen von den resistiven Eigenschaften des Sensormaterials Gebrauchs gemacht wird. Vielmehr werden die Thermospannungen gemessen.

Weiterhin sind aus US 3,951,603 Materialien nach der allgemeinen Formel $A_{1-x}A'_xBO_{3-\delta}$ für Gassensoren bekannt, wobei grundsätzlich Erdalkali-dotierte Lanthan-Ferrite umfaßt sind. Allerdings sind nur die Verbindungen $Sm_{0,6}Sr_{0,4}CoO_3$, $Sm_{0,4}Sr_{0,6}CoO_3$ und $La_{0,993}Sr_{0,007}CoO_3$ als geeignet für Sensoren zur Sauerstoffmessung angegeben, die anderen Beispiele aus US 3,951,603 beziehen sich auf Sensormaterial für die Messung von reduzierenden Gasen. Die drei angeführten, prinzipiell sauerstoffsensitiven Sensormaterialien sind allerdings keine Lanthan-Ferrite und sie weisen überdies nur eine sehr geringe Sauerstoffempfindlichkeit auf.

Aufgabe der vorliegenden Erfindungs ist es, demgegenüber verbesserte Sensormaterialien für Sauerstoffsensoren auf der Basis von Lanthan-Ferriten zu schaffen, die für die Anwendung in $\lambda$-Sonden für Abgase von Verbrennungsprozessen geeignet sind. Insbesondere sollen diese Materialien im Bereich von mageren Abgasgemisch ($\lambda > 1$) einen temperaturunabhängigen Sensorwiderstand aufweisen, während sie allerdings im Fettbereich temperaturabhängig sind. Der Einfluß der Temperatur auf den Sensorwiderstand soll dann durch die Temperaturabhängigkeit der thermodynamischen Gleichgewichtsreaktionen der im Abgas typischerweise enthaltenen Gaskomponenten möglichst kompensiert werden. Der Einfluß der Temperatur auf dem Widerstandshub zwischen Fett- und Magerbereich soll also weitgehend ausgeschaltet werden.

Gelöst wird diese Aufgabe durch Sauerstoffsensoren aus Erdalkali-dotierten perowskitischen Lanthan-Ferriten als Sensormaterial nach dem kennzeichnenden Teil des Hauptanspruchs.

Die in den erfindungsgemäßen Sauerstoffsensoren als Sensormaterial eingesetzten Erdalkali-dotierten Lanthan-Ferrite haben die allgemeine Formel

$$La_{1-x}Me_xFeO_{3-\delta}$$

worin Me eines der Erdalkalimetalle Mg, Ca, Sr, Br, insbesondere Ca, Sr, Ba, und der Dotierungsgrad x = 0,1 bis 0,3 ist. Das Sauerstoff-Defizit des Anions beträgt $\delta$ = 0 bis 0,25.

Es wurde gefunden, daß bei solchen Erdalkali-dotierten Lanthanferriten sich die Materialeigenschaften durch geschickte Auswahl der mischkeramischen Zusammensetzung, d.h. durch Variation des Verhältnisses Lanthan zu Erdalkali, wesentlich verbessern lassen. Bei einem Dotierungsgrad im Bereich von 0,1 bis 0,3 weisen die Ferrite eine Temperatur- und $pO_2$-unabhängige Sensorkennlinie auf, soweit der Sauerstoffpartialdruck im Bereich von $10^{-3}$ bis $10^{-2}$ Bar (Lambda größer 1) liegt. Im Fettbereich (Lambda kleiner 1) weisen diese Materialien eine erhöhte Abhängigkeit vom Sauerstoffpartialdruck und der Temperatur auf. Dieser Einfluß der Temperatur auf den Widerstand wird aber durch die Temperaturabhängigkeit des Sauerstoffpartialdrucks, der sich durch die thermodynamischen Gleichgewichtsreaktionen der Abgaskomponenten einstellt, weitgehend kompensiert. Somit ergibt sich im Bereich fetten Abgasgemisches ein annähernd konstanter temperaturabhängiger Sensorwiderstand.

Dies Ergebnis ist überraschend, da in der US-A-4 454 494 angegeben wird, daß eine erhöhte Lanthan-Dotierung von Calciumferraten eine zu hohe elektrische Leitfähigkeit ergibt und daß diese Materialien eine starke Hysteresis der Leitfähigkeit in Abhängigkeit von der Temperatur aufweisen.

Die verwendeten Erdalkali-dotierten La-Ferrite werden beispielsweise aus $La_2O_3$, $Fe_2O_3$ und Erdalkalicarbo-

nat hergestellt, indem die Ausgangsstoffe vermischt, kalziniert und gesintert werden. Die bei der Kalzinierungs-Temperatur $T_K$ ablaufende Festkörperreaktion wird durch folgende chemische Gleichung beschrieben:

$$(1-x)La_2O_3 \; + \; Fe_2O_3 \; + \; 2x \; MeCO_3 \; + \; x/2 \; O_2 \; \xrightarrow{\; T_K \;} \; 2 \; La_{1-x}Me_xFeO3_{-\delta}$$
$$+ \; 2xCO_2 \quad + \quad \delta/2 \; O_2.$$

Bei dieser Kalzinierungsreaktion des Ausgangspulvers gemäß der obigen Reaktionsgleichung erfolgt neben der Abgabe von $CO_2$ zusätzlich eine Abgabe geringer Sauerstoffmengen, welche zu einem Sauerstoffdefizit $\delta$ sowohl im Kalzinat als auch in der daraus erhaltenen Mischkeramik führt. Das $\delta$ im Ausgangspulver wurde gravimetrisch bestimmt und variiert beispielsweise in Abhängigkeit vom Sr-Gehalt zwischen $0{,}00 \leq \delta \leq 0{,}25$. Die nachfolgende Tabelle gibt eine Übersicht der bei Raumtemperatur bestimmten Sauerstoffdefizite in Abhängigkeit vom Sr-Gehalt gemäß der Formel

$$La_{1-x}Sr_xFeO_{3-\delta}$$

| Sr-Gehalt / x | |
|---|---|
| 0,00 | 0,000 |
| 0,01 | 0,000 |
| 0,03 | 0,01 |
| 0,05 | 0,02 |
| 0,10 | 0,03 |
| 0,25 | 0,05 |
| 0,30 | 0,08 |
| 0,40 | 0,10 |
| 0,50 | 0,12 |

Messungen der elektrischen Leitfähigkeit am Bulk-Material zeigen, daß sich $\delta$ für Sr-Gehalte unterhalb $x = 0{,}25$ bei Temperaturen bis zu 1000°C und $pO_2 = 1$ bar nur unwesentlich ändert. Für Mischkeramiken mit einem Sr-Gehalt von $x = 0{,}3$ und mehr erfolgt ab etwa $T = 600°C$ ($pO_2 = 1$ bar) eine zusätzliche Sauerstoffabgabe, die mit steigendem Sr-Gehalt anwächst. Für $La_{0,60}Sr_{0,40}FeO_3$ wurde beispielsweise für $T = 1000°C$ und $pO_2 = 1$ bar mittels der Thermogravimetrie ein zu dem aus der obigen Tabelle ersichtlichen "Grund"-Defizit bei Raumtemperatur ein zusätzliches Sauerstoffdefizit von etwa 0,05 gefunden. Das heißt, für $La_{0,60}Sr_{0,40}FeO_3$ erhält man bei 1000°C und $pO_2 = 1$ bar ein "Gesamt"-$\delta$ von ca. $\delta = 0{,}15$.

Der $\delta$-Bereich der erhaltenen Ferrite erstreckt sich von 0,00 bis x/2 (x = 0 - 25 Mol-%) und hängt von der Temperatur, Erdalkali-Gehlat und vom $pO_2$ ab.

Das eingesetzte $La_2O_3$ wird vorzugsweise zunächst einen vorgeschalteten Glühprozeß unterworfen, bei dem es bei Temperaturen von etwa 700 bis 1000°C geglüht wird. Das $La_2O_3$ kann dann in heißem Zustand (200°C bis 300°C) gemeinsam mit den übrigen Konstituenten stöchiometrisch eingewogen werden. Das so erhaltene Rohpulver wird dann durch Vermahlen gemischt. Die Mischdauer kann mehrere Stunden betragen, beispielsweise für Strontium-Mischkeramiken 3h. Die Materialien werden getrocknet und vorgesintert zum Ausgangspulver.

Die so erhaltenen Ausgangspulver werden gemahlen und danach getrocknet. Sie können einem gegebenenfalls mehrstufigen Verdichtungsprozeß unterworfen werden. Die anschließende Sinterung erfolgt bei Temperaturen von 1250 bis 1450°C.

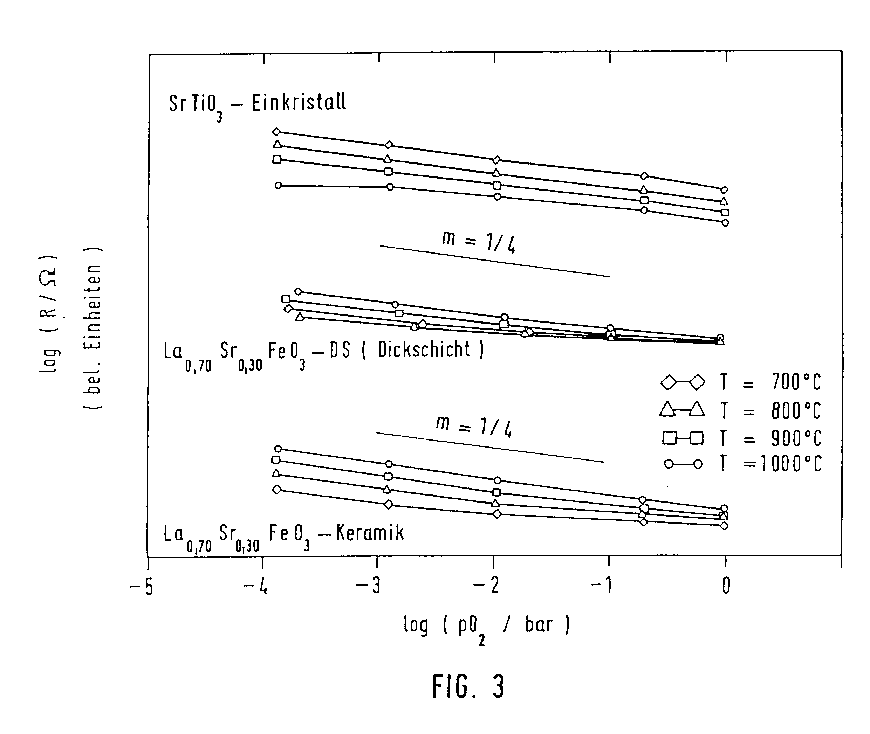

Es hat sich gezeigt, daß bei der Aufbringung der Sensormaterialien mit Dickschichttechniken die Temperaturabhängigkeit des Widerstands im Vergleich zu entsprechendem Bulkmaterial gleicher Zusammensetzung wesentlich geringer ist. Dies ergibt sich aus einem Vergleich von Bulkmaterial mit entsprechendem in Dickschichttechnik aufgebrachtem Material, wobei die entsprechenden temperaturabhängigen Kennlinien in Fig. 3 dargestellt sind.

Die Erfindung wird nachfolgend anhand der Figuren näher erläutert, wobei zunächst Probekörper aus dem erfindungsgemäßen Sensormaterial für die Messungen bereitgestellt werden.

Herstellung von Sr-dotiertem La-Ferrit

Für die Herstellung der Strontium-dotierten La-Ferrite werden die Rohpulver $La_2O_3$, $Fe_2O_3$ und $SrCO_3$ eingesetzt. Ihre wichtigsten Pulvereigenschaften sind in der nachstehenden Tabelle zusammengefaßt:

| Pulver | Reinheit | $d_{50}/\mu m$ |
|---|---|---|
| $La_2O_3$ | >99,98 % | <7 $\mu m$ |
| $Fe_2O_3$ | >99,86 % | <15 $\mu m$ |
| $SrCO_3$ | >99,88 % | 2 - 10 $\mu m$ |

Vor jeder stöchiometrischen Einwaage der verschiedenen Konstituenten erfolgt zunächst ein der Präparation vorgeschalteter Glühprozeß von $La_2O_3$.

Die Ausgangspulver werden dann in einer Planeten-Kugelmühle gemahlen. Sämtliche Pulver zeigen eine mit dem Röntgendiffraktometer ermittelte einphasige Zusammensetzung.

Aus etwa 2,5 g Ausgangspulver werden zunächst in einem zweistufigen Verdichtungsprozeß Grünkörper gepreßt. Die eigentliche Sinterung erfolgt bei T = 1400°C vorwiegend in Luft.

Die mit der Präparation erreichbaren Sinterdichten liegen in einem Bereich zwischen 97 % und 100 % der theoretisch ermittelten Dichte. Der maximal gefundene Fremdphasenanteil beträgt weniger als 1 %.

Bestimmung der $O_2$-Partialdruck- und Temperaturabhängigkeit

Zur Durchführung der Messungen der spezifischen elektrischen Leitfähigkeit werden aus dem keramischen Bulkmaterial quaderförmige Probenstücke verschiedener Geometrien hergestellt.

Die Kontaktierung der Proben erfolgt nach der 4-Punkt-Methode mit Platinpaste, welche bei 1200°C für 20 min eingebrannt wird.

Bei Raumtemperatur durchgeführte Untersuchungen mittels Impedanzspektroskopie ergeben für sämtliche Keramiken ein rein ohm'sches elektrisches Verhalten.

Die verschiedenen Keramiken werden mit einem speziellen Probenträger in einem gasdicht abgeschlossenen Rohrofen untersucht. Die Temperaturen variieren zwischen 800°C und 1000°C, der $pO_2$-Druck kann zwischen $10^{-20}$ Bar und $10^0$ Bar eingestellt werden.

Für die Messung des spezifischen elektrischen Widerstandes wird zunächst das Temperaturgleichgewicht in der Meßkammer abgewartet. Nach Einstellung des jeweiligen $pO_2$-Druckes wird der elektrische Widerstand der Probe innerhalb einer fest vorgegebenen Meßzeit (1h - 4 h) bestimmt.

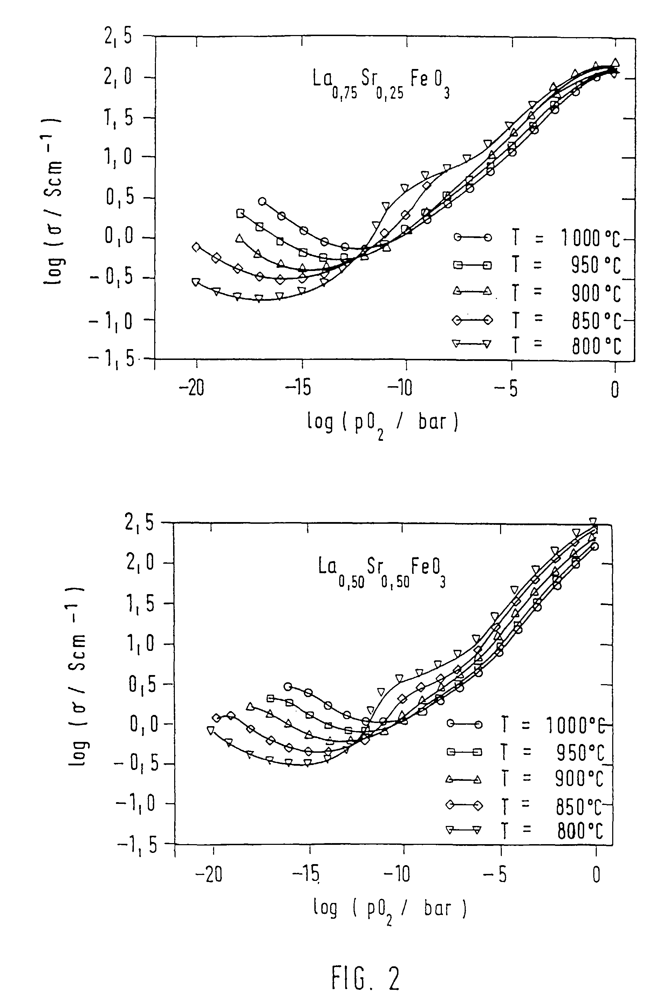

Die Meßergebnisse mit Ferritkeramiken der Formeln $La_{0,75}Sr_{0,25}FeO_3$ und $La_{0,5}Sr_{0,5}FeO_3$ sind in Fig. 1 und 2 dargestellt. Während bei Sr-Dotierungen > 30% sich noch eine starke Temperaturabhängigkeit im Bereich hohen Partialdruck (>$10^{-3}$ bar, mageres Gemisch) ergibt, ist diese Temperaturabhängigkeit für Dotierungen < 30 % vernachlässigbar.

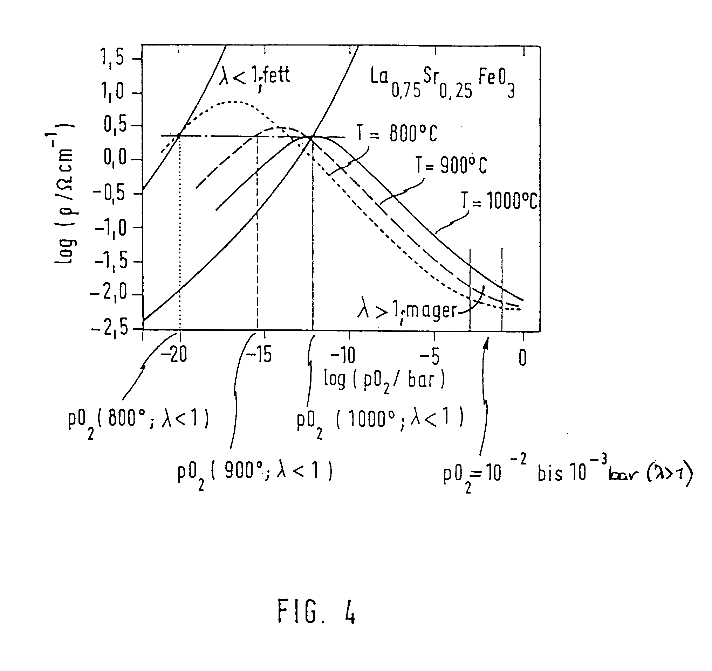

Fig. 4 zeigt die Abhängigkeit des spezifischen Widerstandes log ($\delta/\Omega m^{-1}$) von dem $O_2$-Partialdruck bei Temperaturen von 800°, 900° und 1000°C. Die Signale im Fett- bzw. Magerbereich unterscheiden sich stark, sind aber in einem der jeweiligen Bereiche relativ konstant.

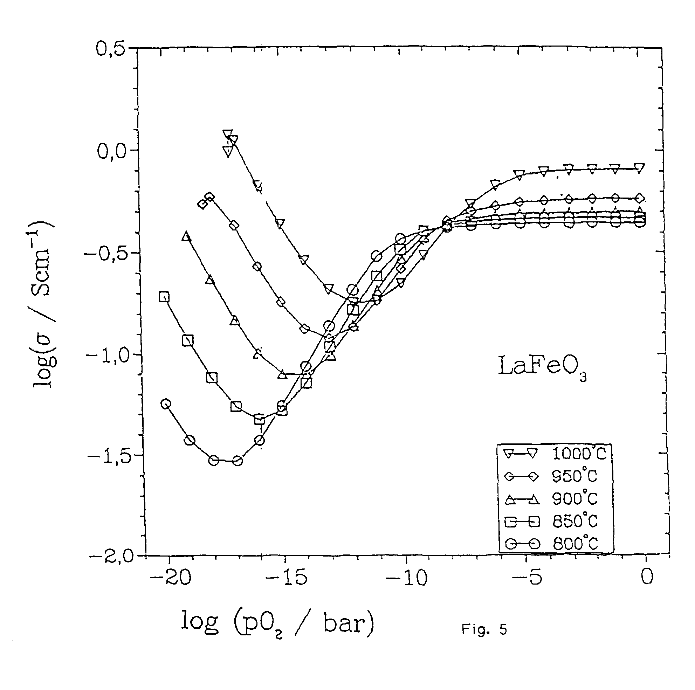

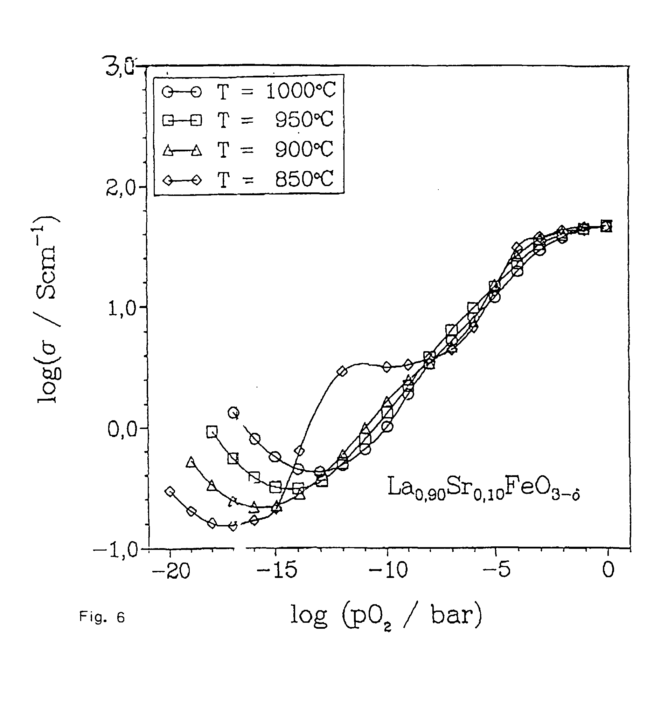

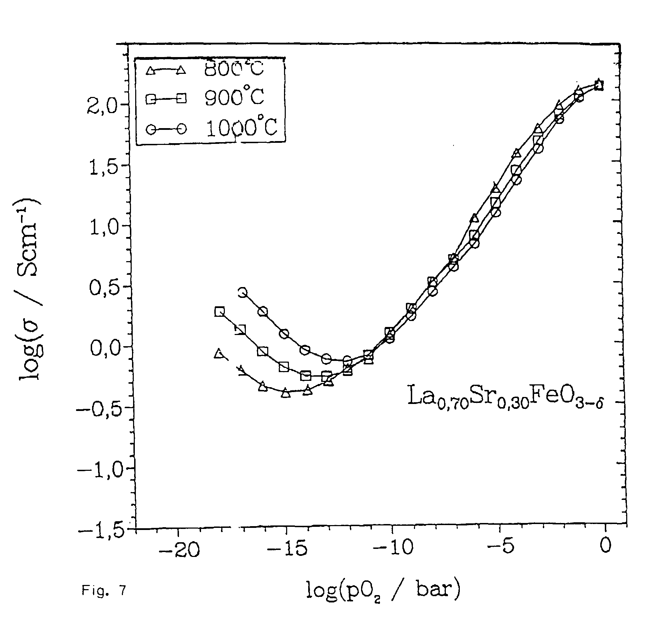

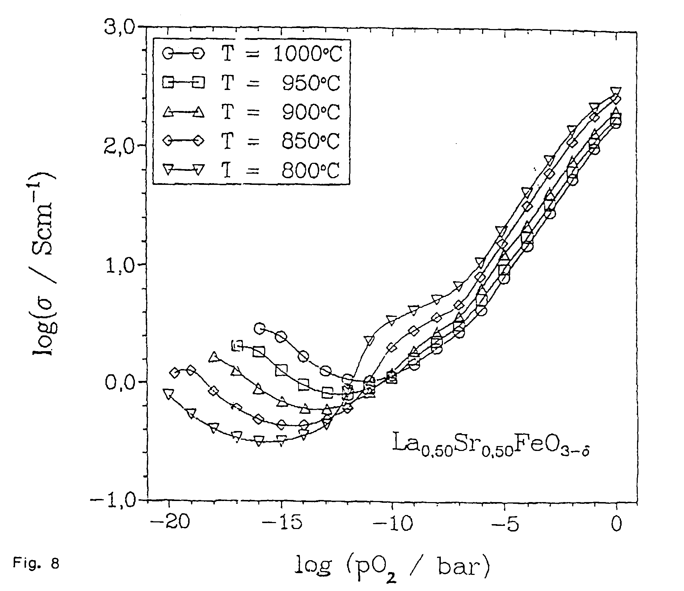

Zum Vergleich sind weitere Kennlinien des Verlaufs der spezifischen elektrischen Leitfähigkeit (Sigma) in Abhängigkeit von der Temperatur und dem Sauerstoffpartialdruck von unterschiedlich dotierten Lanthan-Ferriten in den Figuren 5 bis 8 dargestellt. Dabei zeigt das nichtdotierte Lanthan-Ferrit insbesondere in den linken Kurvenästen eine starke Temperaturabhängigkeit, während bereits bei einem Dotierungsgrad 0,1 (bis auf eine Abweichung bei niedrigerer Temperatur) die verschiedenen Temperaturkurven nahezu zusammenfallen. Dies ist auch bei einem Dotierungsgrad ovn 0,3 der Fall, während bei einem höheren Dotierungsgrad (0,5) die Temperaturabhängigkeit wieder stärker wird, wie sich aus den nicht mehr zusammenfallenden Kurven ergibt.

Wie in Fig. 3 gezeigt, ergibt sich im Bereich hohen Partialdrucks > $-10^{-4}$ bar im Vergleich zwischen keramischem Bulkmaterial und einer Dickschicht nochmals eine deutliche Verringerung der (an sich schon geringen) Temperaturabhängigkeit. Dieses Ergebnis ist äußerst überraschend und für den Fachmann nicht vorhersehbar, da sich normalerweise für Dickschicht und Keramik bestenfalls gleiche Temperatureffekte erzielen lassen. In den meisten Fällen ergibt sich bei Einsatz der Dickschichttechnik sogar gegenüber keramischem Bulkmaterial ein schlechteres Verhältnis im Bezug auf Temperaturabhängigkeit und Kennlinienverlauf.

**Patentansprüche**

1. Sauerstoffsensor aus einem Erdalkali-dotierten perowskitischen Lanthan-Ferrit, der allgemeinen Formel

$$La_{1-x} Me_x FeO_{3-\delta}$$

als Sensormaterial, worin Me eines der Erdalkali-Metalle Mg, Ca, Sr, Ba und x der Dotierungsgrad ist, und das Sauerstoffdefizit des Anions $\delta = 0$ bis 0,25 beträgt, dadurch gekennzeichnet, daß der Dotierungsgrad des Lanthan-Ferrits x = 0,1 bis 0,3 beträgt und an ihm der Widerstand in Abhängigkeit vom Sauerstoffpartialdruck gemessen wird.

2. Sauerstoffsensor nach Anspruch 1, dadurch gekennzeichnet, daß der Dotierungsgrad x = 0,1 bis 0,25 beträgt.

3. Sauerstoffsensor nach Anspruch 1 oder 2, dadurch gekennzeichnet, daß der Dotierungsgrad x = 0,1 bis 0,2 beträgt.

4. Verwendung des Sauerstoffsensors nach Anspruch 1 als Lambdasonde zur Bestimmung des Luft/Kraftstoffverhältnisses im Abgas von Verbrennungsprozessen.

**Claims**

1. Oxygen sensor comprising an alkaline earth metal-doped perovskite lanthanum ferrite of the general formula

$$La_{1-x}Me_xFeO_{3-\delta}$$

as sensor material, in which Me is one of the alkaline earth metals Mg, Ca, Sr or Ba and x is the degree of doping, and the oxygen deficit $\delta$ of the anion is from 0 to 0.25, characterized in that the degree of doping x of the lanthanum ferrite is from 0.1 to 0.3 and the resistance as a function of the oxygen partial pressure is measured with reference to said degree of doping.

2. Oxygen sensor according to Claim 1, characterized in that the degree of doping x is from 0.1 to 0.25.

3. Oxygen sensor according to Claim 1 or 2, characterized in that the degree of doping x is from 0.1 to 0.2.

4. Use of the oxygen sensor according to Claim 1 as a lambda probe for determining the air/fuel ratio in the exhaust gas of combustion processes.

**Revendications**

1. Capteur d'oxygène en ferrite de lanthane perowskite dopée avec des alcalino-terreux, de formule générale

$$La_{1-x}Me_xFeO_{3-\delta}$$

comme matériau capteur, dans laquelle Me est un des métaux alcalino-terreux Mg, Ca, Sr, Ba et x est le degré de dopage, et le déficit en oxygène de l'anion est $\delta = 0$ à 0,25, caractérisé en ce que le degré de dopage des ferrites de lanthane est x = 0,1 à 0,3 et la résistance est mesurée en fonction de la pression partielle de l'oxygène.

2. Capteur d'oxygène selon la revendication 1, caractérisé en ce que de degré de dopage est x = 0,1 à 0,25.

3. Capteur d'oxygène selon la revendication 1 ou 2, caractérisé en ce que le degré de dopage est x = 0,1 à 0,2.

4. Utilisation du capteur d'oxygène selon la revendication 1 comme sonde lamda pour la définition du rapport air/carburant dans le gaz d'échappement de procédé de combustion.

FIG. 2

FIG. 3

FIG. 4

Fig. 5

Fig. 6

Fig. 7

Fig. 8